# EUROPEAN PATENT SPECIFICATION

(11) **EP 1 529 414 B1**
(45) Date of publication and mention of the grant of the patent: **22.06.2011**
(21) Application number: 03787907.9
(22) Date of filing: 15.08.2003
(51) Int. Cl.: H04Q 11/00

(54) **INTERCONNECTIONS IN TELECOMMUNICATION NETWORKS**
VERBINDUNGEN IN TELEKOMMUNIKATIONSNETZEN
INTERCONNEXIONS DANS DES RESEAUX DE TELECOMMUNICATION

(30) Priority: 15.08.2002 GB 0218948
(43) Date of publication of application: 11.05.2005
(73) Proprietor: Ericsson AB, 164 80 Stockholm (SE)
(72) Inventor: GOODFELLOW, Robert, Charles, Brackley NN13 6PA (GB); BOHANNON, Henry, London SW4 9HX (GB)
(74) Representative: Stasiewski, Piotr Grzegorz
(86) International application number: PCT/GB2003/003590
(87) International publication number: WO 2004/017666

(56) References cited:
- US-B1- 6 262 821
- ATSUSHI WATANABE ET AL: "OPTICAL PATH CROSS-CONNECT NODE ARCHITECTURE WITH HIGH MODULARITY FOR PHOTONIC TRANSPORT NETWORKS" IEICE TRANSACTIONS ON COMMUNICATIONS, INSTITUTE OF ELECTRONICS INFORMATION AND COMM. ENG. TOKYO, JP, vol. E77-B, no. 10, 1 October 1994 (1994-10-01), pages 1220-1229, XP000492774 ISSN: 0916-8516
- HU W S ET AL: "MULTICASTING OPTICAL CROSS CONNECTS EMPLOYING SPLITTER-AND-DELIVERYSWITCH" IEEE PHOTONICS TECHNOLOGY LETTERS, IEEE INC. NEW YORK, US, vol. 10, no. 7, 1 July 1998 (1998-07-01), pages 970-972, XP000771730 ISSN: 1041-1135

## Description

The invention relates to interconnections in telecommunication networks comprising network elements which carry multi-wavelength optical signals.

In telecommunication networks it is necessary to be able to interconnect elements of the network to, for example, switch signals carried by the network elements from one to another. For example, the network may comprise a number of rings which are interconnected so that signals can be switched between elements of the rings. Many types of interconnections are known, e.g. optical cross connect (EP-A-1 017 242), optical spectral multiplexer (US 62 62 821 B1, Fevrier Hervé etal, 17 July 2001) and electrical cross connect switches. However, a common problem with many interconnections is that due to their construction it is not straightforward to accommodate an increase in signals between existing network elements, or the addition of elements to the-network. For example, if an interconnection is used to interconnect a plurality of elements of rings in a network, each carrying multi-wavelength signals comprising wavelength components each of which carries on a unique wavelength channel, the interconnection is provided with sufficient connections for this number of wavelength channels. If the traffic on one or more of the ring elements is to be increased, e.g. by introducing wavelength components carried on one or more additional wavelength channels, either the interconnection must have been configured to accommodate the additional channels on its installation into the network (which results in a high 'first-in' cost), or the interconnection must be replaced with another, larger, interconnection. Similarly, if the number of ring elements interconnected by the interconnection is to be increased, the interconnection must have been configured to accommodate the additional elements on its installation into the network, or be replaced with a larger interconnection, which would disrupt the traffic signals. It is therefore often desirable but not possible to scale the size of the interconnection to meet the demands of an expanding network capacity.

According to the present invention there is provided an interconnection adapted to interconnect two or more elements of a telecommunication network, the interconnection comprising for each network element:
at least one splitter device comprising:
at least one input means connected to the network element to receive multi-wavelength signals therefrom,
a splitter unit connected to the or each input means to receive the multi-wavelength signals therefrom and to split each multi-wavelength signal into a number of split multi-wavelength signals,
and, for the or each splitter unit,
a plurality of output means wherein at least one output means is connected to the splitter unit to receive split multi-wavelength signals therefrom,
at least one switching unit, comprising:
one or more input means wherein at least one input means is connected to an output means of a splitter unit to receive split multi-wavelength signals therefrom,
a switch connectable to the input means to select split multi-wavelength signals from one of the input means, and
an output means connected to the switch to receive the selected split multi-wavelength signals therefrom,
and, for each switching unit, a filter unit, comprising:
an input means connected to the output means of the switching unit to receive the selected split multi-wavelength signals therefrom,
a wavelength-selective filter connected to the input means to receive the selected split multi-wavelength signals therefrom and to select single-wavelength signals therefrom, an output means connected to the wavelength-selective filter to receive single wavelength signals therefrom , and
a transponder connected to the output means of a filter unit, the transponder comprising a receiver which is connected to a filter unit and receives signals therefrom, a signal processing unit which is connected to the receiver and receives signals therefrom, and a transmitter which is connected to the signal processing unit and receives signals therefrom and transmits signals to a network element, wherein
the transmitter comprises a tuneable transmitter, which is tuneable to transmit single-wavelength signals having one wavelength component on a required wavelength channel; and said at least one splitter device for at least one network element is provided with one or more spare output means which are not connected to an input means of a switching unit, and are used to scale the interconnection to accommodate additional wavelength components in the multi-wavelength signals carried by one or more of the network elements, and/or to accommodate one or more further network elements..

With the interconnection of the invention, extra traffic through the interconnection can be accommodated simply by adding one or more tuneable transmitters as required, whereas it was hitherto necessary to provision all options in the first instance or replace the entire interconnection in the event of increased traffic.

For example, the number of tuneable transmitters, which are expensive components, corresponding to traffic transmitted between two particular network elements, can be significantly less than the number of multi-wavelength signals to reduce initial costs, if the traffic flow is nevertheless satisfied. Further tuneable transmitters can then be added if and when the traffic flow increases.

Preferably, the wavelength-selective filters to which the tuneable transmitters are connected are also tuneable.

The network elements may be add/drop multiplexers, and the interconnection may serve to connect rings including such add/drop multiplexers.

By a multi-wavelength signal it is meant a signal comprising two or more wavelength components, each wavelength component being carried on a unique wavelength channel. The or each multi-wavelength signal may comprise any number of wavelength components, i.e. may comprise wavelength components carried on any number of wavelength channels. For example, there may be 1 to 160 wavelength channels or more.

By a single-wavelength signal it is meant a signal comprising one wavelength component which is carried on a unique wavelength channel.

For each or some of the network elements, the or each splitter device may split each multi-wavelength signal into a number of split multi-wavelength signals which depends on the number of wavelength components of the multi-wavelength signal. For each or some of the network elements, the or each splitter device may split each multi-wavelength signal into a number of split multi-wavelength signals which depends on the number of network elements interconnected by the interconnection. For example, each multi-wavelength signal may be split into a number of split multi-wavelength signals equal to the number of wavelength components of the multi-wavelength signal times the number of network elements, or (the number of wavelength components of the multi-wavelength signal) times (the number of network elements minus 1).

For each or some of the network elements, each output means of the or each splitter device may be connected to a splitter unit to receive multi-wavelength signals therefrom. For each or some of the network elements, each output means of the or each splitter device may be connected to an input means of a switching unit, to output split multi-wavelength signals to the switching unit. For each or some of the network elements, each output means of the or each splitter device which is connected to an input means of a switching unit, is preferably connected to a unique input means.

For each or some of the network elements, the or each input means of the or each switching unit may be connected to an output means of a splitter device, to receive split multi-wavelength signals therefrom. For each or some of the network elements, the or each or some of the switching units may be provided with one or more spare input means which are not connected to an output means of a splitter device. The or each spare input means may be used to scale the interconnection, for example, to accommodate one or more further network elements. For each or some of the network elements, each input means of the or each switching unit which is connected to an output means of a splitter device, is preferably connected to a unique output means.

For each or some of the network elements, the number of input means provided on the or each switching unit may depend on the number of network elements which are interconnected by the interconnection. For each or some of the network elements, the number of input means provided on the or each switching unit may be equal to the number of network elements which are interconnected by the interconnection. The or each switching unit may then be capable of receiving split multi-wavelength signals from each network element, including the network element to which the signals output from the switching unit are transmitted, i.e. signals which are dropped from a network element to the interconnection may be added back to that element. For each or some of the network elements, the number of input means provided on the or each switching unit may be less than the number of network elements which are interconnected by the interconnection. The or each switching unit may then be capable of receiving split multi-wavelength signals from only some of the network elements. Specifically, for each or some of the network elements, the number of input means provided on the or each switching unit may be one less than the number of network elements which are interconnected by the interconnection, and the or each switching unit of each network element may be arranged to receive split multi-wavelength signals from only the other network elements. For each or some of the network elements, the number of input means provided on the or each switching unit may be greater than the number of network elements initially interconnected by the interconnection. The spare input means may be used to scale the interconnection, for example to accommodate one or more further network elements.

For each or some of the network elements, the interconnection may be provided with a number of switching units which may depend on the number of wavelength components in the multi-wavelength signals to be received by the switching units. For example, for each or some of the network elements, the number of switching units provided may be equal to the maximum number of wavelength components in the multi-wavelength signals to be received by the switching units. For these network elements, the interconnection will thus be fully provisioned, i.e. be capable of simultaneously forwarding each wavelength component in multi-wavelength signals comprising the maximum number of wavelength components. For each or some of the network elements, the number of switching units provided may be less than the maximum number of wavelength components in the multi-wavelength signals to be received by the switching units. For these network elements, the interconnection will thus be under provisioned, i.e. not be capable of simultaneously forwarding each wavelength component in multi-wavelength signals comprising the maximum number of wavelength components. Such an interconnection may be used in circumstances when, although a network element is able to and occasionally carries multi-wavelength signals comprising the maximum number of wavelength components, in practice most of the time it carries multi-wavelength signals comprising a smaller number of wavelength components. For each or some of the network elements, the number of switching units provided may be more than the maximum number of wavelength components in the multi-wavelength signals to be received by the switching units, i.e. one or more spare switching units may be provided. For these network elements, the interconnection will thus be over provisioned, i.e. be capable of simultaneously forwarding each wavelength component in multi-wavelength signals comprising the maximum number of wavelength components, without the need to use all of the switching units. The or each or some of the spare switching units may be used to scale the interconnection, for example to accommodate an increase in the number of wavelength components in the multi-wavelength signals to be received by the switching units from any of the network elements. The or each or some of the spare switching units may be used to provide redundancy in the event of one or more failures.

The interconnection may be scalable to accommodate interconnection of one or more additional network elements. For each additional network element, this may be achieved by providing the interconnection with one or more additional splitter devices and one or more additional switching units and filter units, and providing connections from these to the existing network elements. For each existing network element, the or each splitter device must be adapted to split the multi-wavelength signals into additional split multi-wavelength signals, and the or each switching unit must be adapted to receive the additional split multi-wavelength signals. Splitting the multi-wavelength signals into additional multi-wavelength signals can be achieved by, for example, adding additional splitter units and output means to each splitter device, or using existing, spare splitter units and/or output means. Receiving additional split multi-wavelength signals may be achieved, for example, by adding additional input means to a switching unit e.g. by adding another switching unit to an existing input means. However, this involves some downtime of the input means, which is usually not acceptable. Receiving additional split multi-wavelength signals is preferably achieved by providing and using at least one spare input means on each switching unit. It can be seen that the interconnection does not have to be provided with sufficient expensive switching units and filter units to accommodate all possible numbers of interconnected network elements from its inclusion in the network, but may be incrementally added to as subsequently required. Such scalability avoids a high first in cost for the interconnection.

The interconnection may be scalable to accommodate an increase in the number of wavelength components in the multi-wavelength signals carried by at least one of the network elements. For each additional wavelength component, this may comprise providing additional split multi-wavelength signals, and using additional switching and filter units. Providing additional split multi-wavelength signals may be achieved by, for example, providing one or more additional splitter devices, and/or providing one or more additional splitter units and/or output means to existing splitter devices, and/or using spare splitter units and/or output means already provided in the existing splitter devices. The additional switching units and filter units may comprise units added to the interconnection, and/or may comprise one or more spare switching units and filter units already provided in the interconnection. Preferably, for each additional wavelength component, one or more existing, spare splitter devices/units are used (these are relatively cheap components and spares may therefore be readily provided in the interconnection), and additional switching units and filter units (which are more expensive) are added to the interconnection. As before, the interconnection does not therefore have to be provided with sufficient expensive switching units and filter units to accommodate all possible numbers of wavelength components from its inclusion in the network, but may be incrementally added to as subsequently required. Such scalability avoids a high first in cost for the interconnection.

Each or some of the splitter devices may be a power splitter device, in which the power of each multi-wavelength signal received by the splitter device is divided between the split multi-wavelength signals. The power division between the split signals may be even or uneven. Each or some of the splitter units may comprise one splitting stage, wherein a received multi-wavelength signal is split into a plurality of split multi-wavelength signals in one operation. Each or some of the splitter units may comprise more than one splitting stage, wherein a received multi-wavelength signal is split into a plurality of split multi-wavelength signals in more than one operation. Each or some of the splitter devices may comprise fused fibre splitter devices. Each or some of the splitter devices may comprise planar waveguide splitter devices.

When two or more switching units are provided for each or some of the network elements, these are preferably grouped together in the interconnection. The switch of each or some of the switching units may be configurable to determine the input means to which the switch is connected and therefore which split multi-wavelength signals are selected. Configuration of each or some of the switches may be controlled by an operator of the telecommunication network. Configuration of each or some of the switches may be carried out directly or remotely. Configuration of each or some of the switches may be made in response to changes in, for example, path provisioning, and/or path availability, and/or path protection requirements in the telecommunication network. Automatic configuration of each or some of the switches may be made in response to a failure in the network. Each or some of the switches may comprise a moving fibre switch. Each or some of the switches may comprise a MEMS mirror switch. Each or some of the switches may comprise a reflecting movable prism switch.

The wavelength-selective filter of each or some of the filter units may be tuneable, i.e. may be adjustable to select single-wavelength signals having a particular wavelength component from the multi-wavelength signals. Tuning of each or some of the filters may be controlled by an operator of the telecommunication network. Tuning of each or some of the filters may be carried out directly or remotely. Tuning of each or some of the filters may be made in response to changes in, for example, path provisioning, and/or path availability, and/or path protection requirements in the telecommunication network. Automatic tuning of each or some of the filters may be made in response to a failure in the network. Each or some of the wavelength-selective filters may comprise a graded index filter. Each or some of the wavelength-selective filters may comprise selectable thin film filter elements. Each or some of the wavelength-selective filters may comprise an adjustable MEMS cavity filter.

The interconnection may comprise one or more combiners. For example, for each or some of the network elements, the interconnection may comprise two or more filter units, and a combiner which combines the signals transmitted by at least two, preferably all, of the filter units, and transmits the combined signals to the network element. The or each or some of the combiners may be a broadband combiner, in which the signals received by the combiner are combined regardless of their wavelength. The or each or some of the combiners may comprise one combining stage, wherein signals are combined in one operation. The or each or some of the combiners may comprise more than one combining stage, wherein signals are combined in more than one operation. The or each or some of the combiners may comprise a fused fibre combiner. The or each or some of the combiners may comprise a planar waveguide combiner.

The interconnection may comprise one or more transponders. For each or some of the network elements, a transponder may be connected to the output means of the filter unit, or each filter unit, or each of some of the filter units. For each or some of the network elements, the filter unit, or each filter unit, or each of some of the filter units may be provided within a transponder. The or each or some of the transponders may be an optical-electrical-optical transponder, i.e. a transponder which receives optical signals, converts them to electrical signals, and converts these back to optical signals. The or each or some of the transponders may comprise a receiver. The or each receiver may be connected to a filter unit and may receive signals therefrom. The or each or some of the receivers may be an optical-electrical receiver, i.e. a receiver which receives optical signals and converts these to electrical signals. The or each or some of the receivers may comprise a photodetector, for example a photodiode. The or each or some of the transponders may comprise a signal processing unit. The or each signal processing unit may be connected to a receiver and may receive signals therefrom. The or each or some of the signal processing units may comprise an electrical-electrical signal processing unit, i.e. a unit which receives electrical signals and outputs electrical signals. The or each or some of the signal processing units may comprise signal reshaping electronics, and/or signal retiming electronics, and/or signal resizing electronics. The or each or some of the transponders may comprise a transmitter. The or each transmitter may be connected to a signal processing unit and may receive signals therefrom. The or each transmitter may transmit signals to a network element. The or each or some of the transmitters may comprise an electrical-optical transmitter, i.e. a transmitter which receives electrical signals and converts these to optical signals. The or each or some of the transmitters may comprise a tunable transmitter. The or each or some of the tuneable transmitters may be tunable to transmit single-wavelength signals having one wavelength component carried on a required wavelength channel. The or each or some of the transmitters may comprise a directly modulated laser, or a continuous laser coupled to an external modulator, or a continuous laser with an integrated modulator, or a combination of any of these. The or each or some of the transmitters may receive electrical signals and may use these to modulate the laser, to produce optical single-wavelength signals. The or each or some of the modulated lasers may be tunable, for example to output optical single-wavelength signals having a wavelength component carried on a required wavelength channel. The or each or some of the transponders may be unidirectional. When the interconnection comprises two or more transponders, these may be connected to each other, for example via an electrical interface or an optical interface such as a very short range (VSR) grey optical interface.

The interconnection may comprise one or more amplifiers, which may be positioned at one or more locations in the interconnection. For example, at least one amplifier may be positioned in the interconnection adjacent to each or some of the splitter devices, to amplify signals received from a network element before they are transmitted to a splitter device. When a splitter device comprises a plurality of splitting stages, at least one amplifier may be positioned in the interconnection between at least some of the splitting stages. At least one amplifier may be positioned in the interconnection adjacent to each or some of the splitter devices, to amplify signals output by a splitter device before they are transmitted to one or more switching units: The amplifiers may then be used to overcome any signal losses introduced by the splitter devices. At least one amplifier may be positioned in the interconnection adjacent to each or some of the switching units, to amplify signals output by a switching unit before they are transmitted to a filter unit. At least one amplifier may be positioned in the interconnection adjacent to each or some of the filter units, to amplify signals output by a filter unit before they are transmitted to a network element. When the interconnection comprises one or more combiners, at least one amplifier may be positioned in the interconnection adjacent to each or some of the combiners, to amplify signals output by a combiner before they are transmitted to a network element. In a preferred embodiment, at least one amplifier is positioned to amplify signals received from a network element. This has been found to have a less detrimental effect on the signal to noise ratio of the signals, than if one or more amplifiers are placed elsewhere in the interconnection. The or each or some of the amplifiers may comprise a semi conductor optical amplifier. The or each or some of the amplifiers may comprise an erbium doped fibre amplifier.

As the signals from the network elements pass through the components of the interconnection, noise is added to the signals. This is particularly the case when the interconnection comprises one or more amplifiers, which may generate, for example, amplified spontaneous emission (ASE) noise. The interconnection may comprise one or more noise blocking filters. For example, at least one noise blocking filter may be positioned in the interconnection just prior to the output of signals to each of the network elements. Such noise blocking filters may be used to substantially block noise at wavelengths which do not carry traffic. For example, the signals output to a particular network element may comprise signals carried on a red wavelength channel and signals carried on a blue wavelength channel, and a noise blocking filter may be used to substantially block all noise at wavelengths which are not in either of these wavelength channels. This will prevent such noise from being added to the existing signals on the network element, which could contain signals at these blocked wavelengths. The or each noise blocking filter may be an ASE noise blocking filter, such as a filter as described in International Patent Application Number WO 02/093 806.

The interconnection may comprise a stand-alone device. Each component of the interconnection may be contained in the stand-alone device. Alternatively, one or more components of the interconnection may be incorporated into the stand-alone device, and/or one or more components of the interconnection may be incorporated into the network elements. The or each component incorporated into the network elements may be managed by the network elements or managed on their own.

The interconnection may be positioned between and may interface with a signal drop point and a signal add point of each network element being interconnected. The interconnection is preferably positioned such that, for each network element, the or each splitter device is connected to the signal drop point of the element, and at least one combiner is connected to the signal add point of the element. This and the configuration of the interconnection have been found to be advantageous with regard to the signal to noise ratio (SNR) of signals launched by the transmitters. Each or some of the network elements may be part of a ring, e.g. a ring topology in a wavelength division multiplexing (WDM) telecommunications network. The interconnection may be positioned between and interface with a signal drop point and a signal add point of each ring.

The network elements may output signals along a signal path, for example an optical fibre, connected to the interconnection. The network elements may output signals along two or more signal paths, for example East and West signal paths and/or protection signal paths. The signal paths may each be connected to the same interconnection, or one or more of the signal paths may be connected to different interconnections. For example, for a network element having East and West signal paths and East and West protection signal paths, the East and West signal paths may be connected to a first interconnection, and the East and West protection signal paths may be connected to a second interconnection. The interconnection for the protection signal paths may comprise transponders which monitor for errors in the signal paths by poling from one single-wavelength signal to another by retuning a tunable filter connected to each transponder. In each case, the interconnection preferably comprises at least one splitter device, at least one switching unit, and at least one filter unit for each signal path.

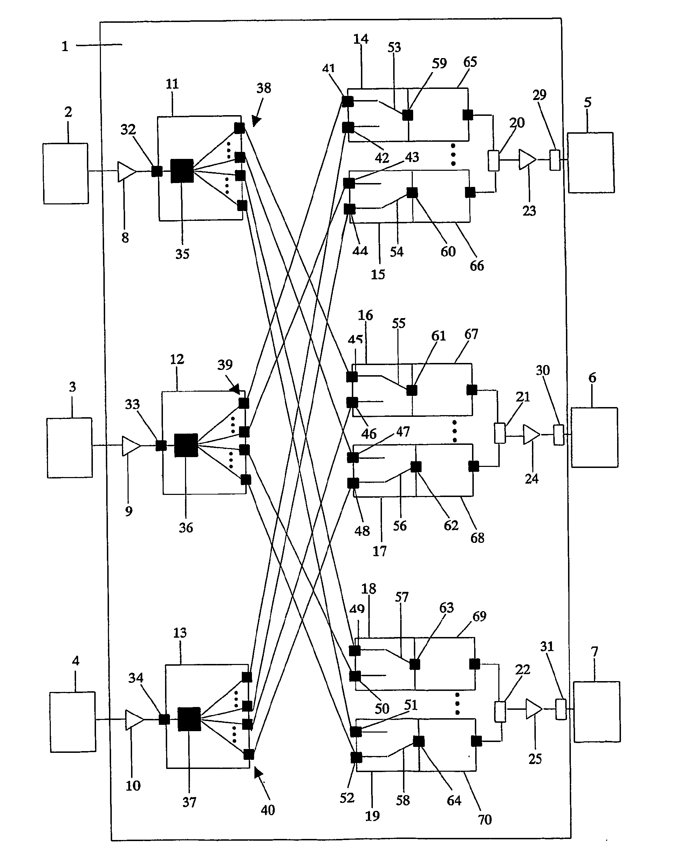

The invention will now be described by way of example only, with reference to the accompanying drawing which shows a schematic representation of an interconnection according to the invention, used to interconnect three elements of a telecommunications network.

The figure shows an interconnection 1 used to interconnect three network elements each comprising part of a ring and each having a signal drop point 2, 3, 4 and a signal add point 5, 6, 7. For each network element, the interconnection comprises an amplifier 8, 9, 10, a splitter device 11, 12, 13, thirty two switching units e.g. 14 and 15, 16 and 17, and 18 and 19, thirty two transponders e.g. 65 and 66, 67 and 68, and 69 and 70, a combiner 20, 21, 22, an amplifier 23, 24, 25, and a noise blocking filter 29, 30, 31. For clarity, only two of the thirty two switching units and transponders for each element are shown. Optical fibre connections are provided between the components of the interconnection as shown.

Each splitter device 11, 12, 13 comprises an input means 32, 33, 34, a splitter unit 35, 36, 37, sixty four output means 38, 39, 40 (only four of which for each device are shown for clarity), and optical fibre connections therebetween as shown. Each splitter unit 35, 36, 37 splits each multi-wavelength signal received by it into sixty four split multi-wavelength signals and sends split multi-wavelength signals to each output means connected to it. Each splitter device is a fused fibre power splitter device.

Each switching unit comprises two input means e.g. 41 to 52, a switch e.g. 53 to 58 and an output means e.g. 59 to 64. In each switching unit, each switch is configured to select signals from one of the input means at any given time, which signals are passed to the output means. Each switch comprises a MEMS mirror switch.

Each transponder e.g. 65 to 70 comprises a filter unit, a receiver connected to the filter unit, a signal processing unit connected to the receiver, and a transmitter connected to the signal processing unit. Each filter unit comprises a wavelength-selective filter, tuned to select single-wavelength signals from the multi-wavelength signals received by it. Each receiver comprises a photodiode, and receives the single-wavelength signals and converts these optical signals to electrical signals. Each signal processing unit comprises signal reshaping, signal retiming and signal resizing electronics, and uses these to process the electrical signals received by it. Each transmitter comprises a modulated laser, comprising a continuous laser coupled to an external modulator, which converts the electrical signals received by it to optical single-wavelength signals for output. The laser is tunable to enable output of optical single-wavelength signals having a wavelength component carried on any required wavelength channel.

Each combiner 20-22 comprises a fused fibre combiner, and combines the signals received from the transponders 65 and 66, 67 and 68, and 69 and 70 respectively, as shown. Each of the filters 29, 30, 31 comprises an ASE noise blocking filter, such as that described in International Patent Application No. WO 02/093 806.

In this embodiment, each network element carries DWDM signals, each comprising up to thirty two wavelength components each carried on a unique wavelength channel. As described above, each network element is provided at its drop side with a splitter device. Each splitter device receives dropped DWDM multi-wavelength signals from its respective element, and splits these signals into a sufficient number of split multi-wavelength signals so that split multi-wavelength signals can be sent to each switching unit of the other elements. For example, the splitter device 11, connected to the signal drop point 2 of the first element, receives DWDM multi-wavelength signals from this element and splits these into sixty four split niulti-wavelength signals, for each of the thirty two switching units (e.g. 16, 17) connected to the second element, and for each of the thirty two switching units (e.g. 18, 19) connected to the third element. In this embodiment, the splitter device 11 does not connect to the thirty two switching units (e.g. 14, 15) of the first element. Each switching unit of an element receives split multi-wavelength signals from the two other elements via its two input means. The switch of each unit is configured to select split multi-wavelength signals from one of the input means, and therefore network elements at any given time, and the selected split multi-wavelength signals are output via the switching unit's output means to the transponder connected to the switching unit. For example, the thirty two switching units (e.g. 16, 17) of the second element each receive split multi-wavelength signals from the first element and from the third element via their input means (e.g. 45 to 48). The switch (e.g. 55, 56) of each of these switching units at any given time selects split multi-wavelength signals from one of the input means i.e. from either the first element or the third element for onward transmission. Each transponder of each network element receives selected split multi-wavelength signals and the filter unit in each transponder is tuned to filter each selected split multi-wavelength signal to remove any signals therein carried on all but one wavelength channel, i.e. the filter unit selects single-wavelength signals. The filter unit in each of the thirty two transponders of each network element is tuned to select signals carried on a unique wavelength channel of the thirty two wavelength channels. For example, the filter unit in the first transponder 67 of the second element is tuned to select signals carried on a first wavelength channel, the filter unit in the second transponder (not shown) of the second element is tuned to select signals carried on a second wavelength channel, and so on to the filter unit in the last transponder 68 of the second element which is tuned to select signals carried on a last wavelength channel. For each transponder, the filter unit transmits the single-wavelength signals on to the photodiode receiver which converts the optical single-wavelength signals into electrical signals. The electrical signals are passed to the signal processing unit, which processes the signals by reshaping, retiming and resizing them. The electrical signals from the signal processing unit are passed to the modulated laser of the transmitter which converts these signals to optical signals, and outputs the optical signals. The laser is tunable to output optical single-wavelength signals carried on any wavelength channel required by the network element to which it transmits signals. The signals from each transponder are output to a combiner (e.g. 20, 21, 22), which combines the signals received and outputs a composite signal to an amplifier (23, 24, 25). The output of each amplifier is connected to a noise blocking filter (29, 30, 31). Each of these blocks ASE noise at wavelengths where signals are not present, introduced for example by the amplifiers in the interconnection, and transmits the signals to the signal add point 5, 6 or 7 of its respective element.

In this way, the interconnection 1 can be used to switch signals carried on selected wavelength channels from selected network elements to the other network elements. For example, by appropriate setting of the switches of the switching units (e.g. 14, 15) and the filters of the transponders (e.g. 65, 66) of the first element, it is possible to switch signals carried on, for example, a first wavelength channel of the second element and a last wavelength channel of the third element to the first element.

In this embodiment, for each network element the interconnection is provided with one splitter device having one splitter unit, and each of the output means is used to output split signals to a switching unit. It can be readily understood that further splitter devices, and/or splitter units, and/or output means can be provided. It will also be appreciated that not all the initially supplied splitter devices, and/or splitter units, and/or output means need be immediately used. Some spare devices, and/or units, and/or output means may be provided to allow the interconnection to be scalable to accommodate, for example, an increase in the number of wavelength components of the signals carried by any of the network elements. Similarly, one or more spare combiners may also be provided.

In this embodiment, for each network element the interconnection is provided with thirty two switching units, i.e. a number equal to the maximum number of wavelength components of the signals received by the switching units from each of the elements. However, it will be readily understood that, for each element, the interconnection need not be provided with a number of switching units equal to the number of wavelength components. For example, although each element may be able to carry multi-wavelength signals having thirty two wavelength components, in practice not all wavelength components are present in the multi-wavelength signals all of the time i.e. not all wavelength channels carry signals all of the time. Therefore the number of switching units provided for each network element could be less than thirty two, for example could be equal to the average number of wavelength components in the multi-wavelength signals at any given time. Alternatively, the number of switching units provided for each element could be greater than thirty two. The spare switching units may be used to allow the interconnection to be scalable to accommodate an increase in the number of wavelength components in the signals carried by one or more of the network elements. It will also be readily understood that each network element may carry signals comprising a different number of wavelength components, and that for each element the interconnection may be provided with a different number of switching units.

In this embodiment, each filter unit is tuned to select a unique wavelength component, i.e. a wavelength component carried on a unique wavelength channel, from the multi-wavelength signals received by it. Thus, for each element, each wavelength components of the signals may be transmitted through the interconnection. Regardless of the number of filter units, it will be understood that the filter units need not be tuned to select different wavelength components from the multi-wavelength signals. For example, two or more filter units of an element could be set to select the same wavelength component from the multi-wavelength signals. If such single-wavelength signals are subsequently combined they may interfere with each other. This may be avoided by appropriate tuning of the modulated lasers of the transponders, to change at least one wavelength component i.e. to change the wavelength channel on which at least one of the single-wavelength signals is carried.

In the embodiment described, for each network element each switching unit is provided with two input means, for receiving signals from each of the other elements. It will be appreciated that further input means may be provided, for example such that signals dropped from a particular element may be transmitted back to that element, or to allow the interconnection to be scalable to accommodate further elements. It will also be appreciated that not all the network elements need be connected to each other element.

In the described, preferred embodiment, the interconnection is positioned such that, for each network element, the or each splitter device is connected to the signal drop point of the element, and at least one combiner is connected to the signal add point of the element, and the configuration of the interconnection is, for each network element, a 1:64 splitter device followed by switching units followed by transponders followed by a 32:1 combiner. The splitter devices and combiners will result in loss of amplitude in the signals passing through the interconnection, which loss is proportional to the number of split signals produced by each splitter device (sixty four), or the number of signals combined by each combiner (thirty two). Such loss needs to be compensated for, by amplification of the signals. Such amplification will, however, contribute noise to the signals. It is preferable, where possible, to minimise the contribution to signal noise of any compensating amplifiers placed near the start or launch of a signal, which can be achieved by minimising the signal loss for which the amplifiers have to compensate. In this embodiment, the signals are considered to be launched by the transponders, and the interconnection is configured to place only a 32:1 combiner after each transponder. The resultant loss in signal amplitude, and introduction of noise, will be less and the signal to noise ratio greater than for differently configured interconnections in which more splitting/combining is performed after the transponders. For example, an interconnection may be configured to have a 1:32 splitter device followed by transponders followed by a 1:32 splitter device followed by switching units followed by a 32:1 combiner. Such an interconnection would have a greater signal loss and introduction of noise, i.e. a lower signal to noise ratio.

## Claims

1. An interconnection (1) adapted to interconnect two or more elements (2,5; 3,6; 4,7) of a telecommunication network, the interconnection comprising for each network element:
at least one splitter device (11,12,13), comprising:
at least one input means (32,33,34) connected to the network element to receive multi-wavelength signals therefrom,
a splitter unit (35,36,37) connected to said input means to receive the multi-wavelength signals therefrom and to split each multi-wavelength signal into a number of split multi-wavelength signals,
and, for each splitter device,
a plurality of output means (38,39,40) wherein at least one output means is connected to the splitter unit to receive split multi-wavelength signals therefrom,
at least one switching unit (14-19), comprising:
one or more input means (41-52) wherein at least one input means is connected to an output means of a splitter device to receive split multi-wavelength signals therefrom,
a switch (53-58) connectable to the input means (41-52) to select split multi wavelength signals from one of the input means, and
an output means (59-64) connected to the switch to receive the selected split multi-wavelength signals therefrom,
and, for each switching unit, a filter unit, comprising:
an input means connected to the output means of the switching unit to receive the selected split multi-wavelength signals therefrom,
a wavelength-selective filter connected to the input means to receive the selected split multi-wavelength signals therefrom and to select single-wavelength signals therefrom,
an output means connected to the wavelength-selective filter to receive single-wavelength signals therefrom, and
a transponder (65-70) connected to the output means of a filter unit, the transponder comprising a receiver which is connected to a filter unit and receives signals therefrom, a signal processing unit which is connected to the receiver and receives signals therefrom, and a transmitter which is connected to the signal processing unit and receives signals therefrom and transmits signals to a network element, wherein
the transmitter comprises a tuneable transmitter, which is tuneable to transmit single-wavelength signals having one wavelength component on a required wavelength channel; and **characterised in that**:
said at least one splitter device for at least one network element is provided with one or more spare output means which are not connected to an input means of a switching unit, and are used to scale the interconnection to accommodate additional wavelength components in the multi-wavelength signals carried by one or more of the network elements, and/or to accommodate one or more further network elements.

2. An interconnection according to claim 1 in which the tuneable transmitter comprises a modulated laser.

3. An interconnection according to claim 1 or claim 2, wherein the network elements are optical add/drop multiplexers (2,5; 3,6; 4,7)

4. An interconnection according to any preceding claim, including a noise blocking filter (29; 30; 31) connected to the output of a transponder.

5. An interconnection according to any preceding claim, in which each multi-wavelength signal is split into a number of split multi-wavelength signals equal to (the number of wavelength components of the multi-wavelength signal) times (the number of network elements minus 1).

6. An interconnection according to any preceding claim, in which, for at least one network element, at least one switching unit is provided with one or more spare input means which are not connected to an output means of a splitter device, and are used to scale the interconnection to accommodate one or more further network elements.

7. An interconnection according to any preceding claim, in which, for at least one network element, the number of switching units provided is less than the maximum number of wavelength components in the multi-wavelength signals to be received by the switching units, and the interconnection is under provisioned, i.e. is not capable of simultaneously forwarding each wavelength component in multi-wavelength signals comprising the maximum number of wavelength components.

8. An interconnection according to any preceding claim, in which the wavelength-selective filter of at least one filter unit is tuneable, i.e. is adjustable to select single-wavelength signals having a particular wavelength component from the multi-wavelength signals.

9. An interconnection according to any preceding claim, which comprises a combiner which combines the signals transmitted by at least two of the filter units, and transmits the combined signals to a network element.

10. An interconnection according to any preceding claim, in which at least one filter unit is provided within a transponder.

## Patentansprüche

1. Verbindung (1), die so ausgelegt ist, dass sie zwei oder mehr Elemente (2, 5; 3, 6; 4, 7) eines Telekommunikationsnetzes miteinander verbindet, wobei die Verbindung für jedes Netzelement umfasst:
mindestens eine Splittervorrichtung (11, 12, 13), umfassend:
mindestens ein Eingabemittel (32, 33, 34), das mit dem Netzelement verbunden ist, um Mehrwellenlängensignale davon zu empfangen,
eine Splittereinheit (35, 36, 37), die mit den Eingabemitteln verbunden ist, um die Mehrwellenlängensignale davon zu empfangen und jedes Mehrwellenlängensignal in eine Anzahl von aufgeteilten Mehrwellenlängensignalen aufzuteilen,
und für jede Splittervorrichtung
eine Mehrzahl von Ausgabemitteln (38, 39, 40), wobei mindestens ein Ausgabemittel mit der Splittereinheit verbunden ist, um aufgeteilte Mehrwellenlängensignale davon zu empfangen,
mindestens eine Schalteinheit (14 - 19), umfassend:
ein oder mehrere Eingabemittel (41 - 52), wobei mindestens ein Eingabemittel mit einem Ausgabemittel einer Splittervorrichtung verbunden ist, um aufgeteilte Mehrwellenlängensignale davon zu empfangen,
einen Schalter (53 - 58), der mit den Eingabemitteln (41 - 52) verbindbar ist, um aufgeteilte Mehrwellenlängensignale von einem der Eingabemittel auszuwählen, und
ein Ausgabemittel (59 - 64), das mit dem Schalter verbunden ist, um die ausgewählten aufgeteilten Mehrwellenlängensignale davon zu empfangen,
und für jede Schalteinheit eine Filtereinheit, umfassend:
ein Eingabemittel, das mit dem Ausgabemittel der Schalteinheit verbunden ist, um die ausgewählten aufgeteilten Mehrwellenlängensignale davon zu empfangen,
ein wellenlängenselektives Filter, das mit dem Eingabemittel verbunden ist, um die ausgewählten aufgeteilten Mehrwellenlängensignale davon zu empfangen und Einwellenlängensignale daraus auszuwählen,
ein Ausgabemittel, das mit dem wellenlängenselektiven Filter verbunden ist, um Einwellenlängensignale davon zu empfangen, und
einen Transponder (65 - 70), der mit den Ausgabemitteln einer Filtereinheit verbunden ist, wobei der Transponder einen Empfänger, welcher mit einer Filtereinheit verbunden ist und Signale davon empfängt, eine Signalverarbeitungseinheit, welche mit dem Empfänger verbunden ist und Signale davon empfängt, und einen Sender umfasst, welcher mit der Signalverarbeitungseinheit verbunden ist und Signale davon empfängt und Signale an ein Netzelement sendet, wobei
der Sender einen abstimmbaren Sender umfasst, welcher so abgestimmt werden kann, dass e r Einwellenlängensignale mit einer Wellenlängenkomponente auf einem Kanal der erforderlichen Wellenlänge sendet; und **dadurch gekennzeichnet, dass**:
die mindestens eine Splittervorrichtung für mindestens ein Netzelement mit einem oder mehreren Ersatzausgabemitteln versehen ist, welche nicht mit einem Eingabemittel einer Schalteinheit verbunden sind und zum Skalieren der Verbindungen verwendet werden, um zusätzlichen Wellenlängenkomponenten in den Mehrwellenlängensignalen Rechnung zu tragen, die durch eines oder mehrere der Netzelemente übertragen werden, und/oder einem oder mehreren weiteren Netzelementen Rechnung zu tragen.

2. Verbindung nach Anspruch 1, wobei der abstimmbare Sender einen modulierten Laser umfasst.

3. Verbindung nach Anspruch 1 oder 2, wobei es sich bei den Netzelementen um optische Add/Drop-Multiplexer (2, 5; 3, 6; 4, 7) handelt.

4. Verbindung nach einem der vorhergehenden Ansprüche, umfassend ein Rauschsperrfilter (29; 30; 31), das mit dem Ausgang eines Transponders verbunden ist.

5. Verbindung nach einem der vorhergehenden Ansprüche, wobei jedes Mehrwellenlängensignal in eine Anzahl von aufgeteilten Mehrwellenlängensignalen aufgeteilt wird, die (der Anzahl von Wellenlängenkomponenten des Mehrwellenlängensignals) mal (der Anzahl von Netzelementen minus 1) entspricht.

6. Verbindung nach einem der vorhergehenden Ansprüche, wobei für mindestens ein Netzelement mindestens eine Schalteinheit mit einem oder mehreren Ersatzeingabemitteln versehen ist, welche nicht mit einem Ausgabemittel einer Splittervorrichtung verbunden sind und zum Skalieren der Verbindung verwendet werden, um einem oder mehreren weiteren Netzelementen Rechnung zu tragen.

7. Verbindung nach einem der vorhergehenden Ansprüche, wobei für mindestens ein Netzelement die Anzahl von vorgesehenen Schalteinheiten niedriger als die maximale Anzahl von Wellenlängenkomponenten in den Mehrwellenlängensignalen ist, die von den Schalteinheiten empfangen werden sollen, und die Verbindung unterversorgt ist, d.h. nicht zum gleichzeitigen Weiterleiten jeder Wellenlängenkomponente in Mehrwellenlängensignalen mit der maximalen Anzahl von Wellenlängenkomponenten in der Lage ist.

8. Verbindung nach einem der vorhergehenden Ansprüche, wobei das wellenlängenselektive Filter mindestens einer Filtereinheit abstimmbar ist, d.h. so einstellbar ist, dass es Einwellenlängensignale mit einer bestimmten Wellenlängenkomponente aus den Mehrwellenlängensignalen auswählt.

9. Verbindung nach einem der vorhergehenden Ansprüche, welche ein Verknüpfungsglied umfasst, welches die Signale verknüpft, die durch mindestens zwei der Filtereinheiten gesendet werden, und die verknüpften Signale an ein Netzelement sendet.

10. Verbindung nach einem der vorhergehenden Ansprüche, wobei mindestens eine Filtereinheit innerhalb eines Transponders vorgesehen ist.

## Revendications

1. Interconnexion (1) adaptée pour interconnecter deux ou plusieurs éléments (2,5 ;3,6 ;4,7) d'un réseau de télécommunication, l'interconnexion comprenant pour chaque élément de réseau:
au moins un dispositif diviseur (11,12,13) comprenant:
au moins un moyen d'entrée (32,33,34) connecté à l'élément de réseau pour recevoir depuis celui-ci des signaux à longueurs d'ondes multiples,
une unité de diviseur (35,36,37) connectée audit moyen d'entrée pour recevoir depuis celui-ci les signaux à longueurs d'ondes multiples et pour diviser chaque signal à longueurs d'ondes multiples en une pluralité de signaux à longueurs d'ondes multiples divisées,
et pour chaque dispositif diviseur,
une pluralité de moyens de sortie (38,39,40), dans laquelle au moins un moyen de sortie est connecté à l'unité de diviseur pour recevoir depuis celui-ci des signaux à longueurs d'ondes multiples divisées,
au moins une unité de commutation (14-19) comprenant:
un ou plusieurs moyens d'entrée (41-52), dans laquelle au moins un moyen d'entrée est connecté à un moyen de sortie d'un dispositif de diviseur pour recevoir depuis celui-ci des signaux à longueurs d'ondes multiples divisées,
un commutateur (53-58) pouvant être connecté au moyen d'entrée (41-52) pour sélectionner des signaux à longueurs d'ondes multiples divisées parmi un des moyens d'entrée, et
un moyen de sortie (59-64) connecté au commutateur pour recevoir depuis celui-ci les signaux à longueurs d'ondes multiples divisées sélectionnés,
et, pour chaque unité de commutation, une unité de filtre, comprenant:
un moyen d'entrée connecté au moyen de sortie de l'unité de commutation pour recevoir depuis celui-ci les signaux à longueurs d'ondes multiples divisées sélectionnés,
un filtre sélectif de longueur d'onde connecté au moyen d'entrée pour recevoir depuis celui-ci les signaux à longueurs d'ondes multiples divisées sélectionnés et sélectionner des signaux à longueur d'onde individuelle,
un moyen de sortie connecté au filtre sélectif de longueur d'onde pour recevoir depuis celui-ci des signaux à longueur d'onde individuelle, et
un transpondeur (65-70) connecté au moyen de sortie d'une unité de filtre, le transpondeur comprenant un récepteur qui est connecté à une unité de filtre et reçoit depuis celle-ci des signaux, une unité de traitement de signaux qui est connectée au récepteur et reçoit des signaux depuis celui-ci, et un émetteur qui est connecté à l'unité de traitement de signaux et reçoit des signaux depuis celle-ci et transmet les signaux à un élément de réseau, dans laquelle
l'émetteur comprend un émetteur accordable, qui est accordable afin de transmettre des signaux à longueur d'onde individuelle ayant un composant de longueur d'onde sur un canal de longueur d'onde requis ; et **caractérisé en ce que**
ledit au moins un dispositif de diviseur d'au moins un élément de réseau est pourvu d'un ou plusieurs moyens de sortie isolés qui ne sont pas connectés à un moyen d'entrée d'une unité de commutation, et sont utilisés pour faire évoluer l'interconnexion de manière à renfermer les composants de longueur d'onde additionnels dans les signaux à longueurs d'ondes multiples transportés par un ou plusieurs des éléments de réseau, et/ou pour renfermer un ou plusieurs éléments de réseau supplémentaires.

2. Interconnexion selon la revendication 1, dans laquelle l'émetteur accordable comprend un laser modulé.

3. Interconnexion selon la revendication 1 ou 2, dans laquelle les éléments de réseau sont des multiplexeurs d'insertion/extraction optiques (2,5 ;3,6 ;4,7).

4. Interconnexion selon une quelconque des revendications précédentes, incluant un filtre de blocage de bruit (29 ;30 ;31) connecté à la sortie d'un transpondeur.

5. Interconnexion selon une quelconque des revendications précédentes, dans laquelle chaque signal à longueurs d'ondes multiples est divisé en une pluralité de signaux à longueurs d'ondes multiples divisées égale au (nombre de composants de longueur d'onde du signal à longueur d'ondes multiples) fois (le nombre d'éléments de réseau moins 1).

6. Interconnexion selon une quelconque des revendications précédentes, dans laquelle, pour au moins un élément de réseau, au moins une unité de commutation est pourvue d'un ou plusieurs moyens d'entée isolés qui ne sont pas connectés à un moyen de sortie d'un dispositif diviseur, et sont utilisés pour faire évoluer l'interconnexion de manière à renfermer un ou plusieurs éléments de réseau supplémentaires.

7. Interconnexion selon une quelconque des revendications précédentes, dans laquelle, pour au moins un élément de réseau, le nombre d'unités de commutation prévues est inférieur au nombre maximal de composants de longueur d'onde dans les signaux à longueurs d'ondes multiples devant être reçus par les unités de commutation, et l'interconnexion est sous provisionnée, c'est-à-dire n'est pas capable d'acheminer simultanément chaque composant de longueur d'onde dans des signaux à longueurs d'ondes multiples comprenant le nombre maximal de composants de longueur d'onde.

8. Interconnexion selon une quelconque des revendications précédentes, dans laquelle le filtre sélectif de longueur d'onde d'au moins une unité de filtre est accordable, c'est-à-dire est ajustable afin de sélectionner des signaux à longueur d'onde individuelle ayant un composant de longueur d'onde particulier parmi les signaux à longueurs d'ondes multiples.

9. Interconnexion selon une quelconque des revendications précédentes, qui comprend un combinateur qui combine les signaux transmis par au moins deux des unités de filtre, et transmet les signaux combinés à un élément de réseau.

10. Interconnexion selon une quelconque des revendications précédentes, dans laquelle au moins une unité de filtre est fournie à l'intérieur d'un transpondeur.
